(19) Europäisches Patentamt
European Patent Office
Office européen des brevets

(11) **EP 2 778 296 B1**

(12) **EUROPÄISCHE PATENTSCHRIFT**

(45) Veröffentlichungstag und Bekanntmachung des Hinweises auf die Patenterteilung:
**25.04.2018 Patentblatt 2018/17**

(51) Int Cl.:
*E03B 1/00* *(2006.01)*        *E03B 1/02* *(2006.01)*

(21) Anmeldenummer: **13158602.6**

(22) Anmeldetag: **11.03.2013**

(54) **Pumpensystem**

Pump system

Système de pompe

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.09.2014 Patentblatt 2014/38**

(73) Patentinhaber: **Grundfos Holding A/S**
**8850 Bjerringbro (DK)**

(72) Erfinder:
• **Kallesøe, Carsten Skovmose**
**8800 Viborg (DK)**
• **Hassan, Abdul-Sattar**
**8250 Egå (DK)**

(74) Vertreter: **Patentanwälte Vollmann & Hemmer**
**Wallstraße 33a**
**23560 Lübeck (DE)**

(56) Entgegenhaltungen:
**EP-A1- 2 476 907    WO-A2-2008/090359**

**Beschreibung**

Die Erfindung betrifft ein Pumpensystem für ein Wasserversorgungsnetz nach dem Oberbegriff von Anspruch 1 sowie ein Verfahren zur Regelung einer Pumpeinrichtung in einem Wasserversorgungsnetz.

Wasserversorgungsnetze dienen beispielsweise der Wasserversorgung von ganzen Städten oder Stadtteilen. In der Regel sind in solchen Wasserversorgungsnetzen Pumpen erforderlich, um das zu verteilende Wasser zu fördern und einen gewünschten Druck im Wasserversorgungsnetz sicher zu stellen. Hierzu können neben Förderpumpen, Druckerhöhungspumpen (Booster-Pumpen) eingesetzt sein. In derartigen Wasserversorgungsnetzen schwankt der Verbrauch über den Tag verteilt. Dabei schwankt nicht nur der Verbrauch insgesamt, sondern auch in einzelnen Zweigen des Wasserversorgungsnetzes. Insofern ist es schwierig stets in allen Teilen des Wasserversorgungsnetzes, d. h. in sämtlichen Zweigen einen gewünschten Mindestdruck zu erhalten. Hierzu ist eine Steuerung bzw. Regelung der Pumpen, welche den Druck in dem Wasserversorgungsnetz aufbauen, erforderlich, um deren Förderleistung an den Bedarf anzupassen.

EP 2 476 907 A1 offenbart ein System und ein Verfahren zur Druckregelung in einem Netzwerk zur Fluidverteilung. Die Regelung erfolgt nach einer vordefinierten Pumpenkurve, welche die Beziehung zwischen dem Druck und dem Durchfluss für wenigstens einen Teil des Netzwerkes definiert. Der Druck wird dazu an kritischen Punkten erfasst, wobei dazu Drucksensoren an den kritischen Pumpen direkt mit einer Steuereinrichtung der Pumpstation kommunizieren. Die Regelung der Pumpstation erfolgt auf Grundlage der erfassten Druckwerte und einer Pumpenkurve, welche die Abhängigkeit von Druck und Durchfluss definiert. Wenn der Durchfluss ein vorgegebenes Minimum unter- oder ein vorgegebenes Maximum überschreitet, wird die Pumpenkurve entsprechend angepasst. Nachteilig bei diesem System ist, dass eine ständige aktuelle Druckerfassung an kritischen Punkten des Systems erforderlich ist.

WO 2008/090359 A2 offenbart ein Regelsystem für ein Druckreduzierventil in einem Fluid-Verteil-Netzwerk. Auch bei diesem System wird der Druck an einem kritischen Punkt im Netzwerk erfasst. Die Druckerfassung an dem kritischen Punkt wird zur Kalibrierung benutzt, um eine Regelkurve festzulegen, auf deren Grundlage das Druckreduzierventil geregelt wird. Diese Ausgestaltung hat den Nachteil, dass nur schlecht auf zeitliche Veränderungen im System reagiert werden kann. So können sich kritische Punkte, an welchen hohe Druckverluste auftreten, im zeitlichen Verlauf ändern. Dies kann von einem System, wie es aus WO 2008/090359 A2 bekannt ist nur eingeschränkt berücksichtigt werden.

Im Hinblick auf diese Problematik ist es Aufgabe der Erfindung, ein Pumpensystem für ein Wasserversorgungsnetz mit zumindest einer Pumpeinrichtung sowie ein Verfahren zur Regelung einer solchen Pumpeinrichtung bereitzustellen, welche es in verbesserter Weise ermöglichen, die Förderleistung einer Pumpeinrichtung an den aktuellen Bedarf im Wasserversorgungsnetz so anzupassen, sodass in allen Teilen des Wasserversorgungsnetzes stets ein gewünschter Mindestdruck mit minimalem Energieeinsatz sichergestellt ist.

Diese Aufgabe wird gelöst durch ein Pumpensystem mit den in Anspruch 1 angegebenen Merkmalen sowie ein Verfahren mit den in Anspruch 13 angegebenen Merkmalen. Bevorzugte Ausführungsformen ergeben sich aus den Unteransprüchen, der nachfolgenden Beschreibung sowie den beigefügten Figuren.

Das erfindungsgemäße Pumpensystem dient zum Fördern von Wasser, insbesondere Trinkwasser in einem Wasserversorgungsnetz. Ein solches Wasserversorgungsnetz kann ein weit verzweigtes Netz sein, welches beispielsweise eine Stadt oder einen oder mehrere Stadtteile mit Wasser versorgt. Das Pumpensystem weist zumindest eine Pumpeinrichtung auf, welche dazu dient, das Wasser in dem Wasserversorgungsnetz zu fördern und/oder auf einen gewünschten Druck zu bringen. Bei der Pumpeinrichtung kann es sich um ein Pumpenaggregat oder die Anordnung mehrerer Pumpenaggregate handeln, welche gemeinsam einen gewünschten Druck erzeugen. Insbesondere kann es sich um Druckerhöhungspumpen (Booster-Pumpen) handeln, welche der Druckerhöhung dienen.

Neben der zumindest einen Pumpeinrichtung weist das erfindungsgemäße Pumpensystem zumindest einen Drucksensor auf, welcher den Druck an der Druckseite, d. h. der Ausgangsseite der Pumpeinrichtung erfasst. Ein solcher Drucksensor kann gegebenenfalls direkt an der Ausgangsseite des Pumpenaggregates angeordnet sein oder auch in das Pumpenaggregat selber integriert sein, um den Druck an der Ausgangsseite zu erfassen. Ferner ist zumindest ein Durchflusssensor vorgesehen, welcher den Durchfluss der Pumpeinrichtung erfasst, d. h. den Durchfluss des gesamten von der Pumpeinrichtung versorgten Wasserversorgungsnetzes. Auch ein solcher Durchflusssensor ist vorzugsweise direkt an der Pumpeinrichtung, gegebenenfalls integriert in ein Pumpenaggregat angeordnet. Für den Fall, dass mehrere Pumpen parallel geschaltet verwendet werden, kann auch jedes Pumpenaggregat mit einem einzelnen Durchflusssensor versehen sein und es können diese Durchflüsse der einzelnen Durchflusssensoren zu einem Gesamtdurchfluss addiert werden. Im Sinne der Erfindung wird dann diese Anordnung der mehreren Durchflusssensoren als ein Durchflusssensor zum Erfassen des Durchflusses der Pumpeinrichtung angesehen.

Anstatt einen oder mehrere Drucksensoren oder einen oder mehrere Durchflusssensoren vorzusehen, ist es auch möglich, dass der Druck und/oder der Durchfluss nicht direkt gemessen werden, sondern aus anderen erfassten Größen, insbesondere elektrischen Größen im Pumpenaggregat abgeleitet werden. Ein solches System wird im Sinne dieser Erfindung ebenfalls als Drucksensor bzw. Durchflusssensor angesehen.

Darüber hinaus sind erfindungsgemäß mehrere Drucksensoreinheiten vorgesehen, welche zur entfernten Anordnung von der Pumpeinrichtung in verschiedenen Teilbereichen des Wasserversorgungsnetzes vorgesehen sind. Die Drucksensoreinheiten werden an kritischen Punkten des Wasserversorgungsnetzes angeordnet, um den dort herrschenden Druck zu erfassen. Diese Drucksensoreinheiten umfassen somit jeweils zumindest einen Drucksensor zum Erfassen des Druckes in einem Teilbereich des Wasserversorgungsnetzes. Darüber hinaus sind die Drucksensoreinheiten zweckmäßigerweise mit Kommunikationsmitteln versehen, welche eine Datenübertragung der erfassten Druckwerte zu einer zentralen Steuereinrichtung ermöglichen. Diese zentrale Steuereinrichtung ist vorzugsweise eine Steuereinrichtung, welche zur Steuerung der Pumpeinrichtung dient, d. h. die Pumpeinrichtung steuert bzw. regelt, um einen bestimmten Durchfluss- und/oder Ausgangsdruck an der Druckseite der Pumpeinrichtung einzustellen. Dazu regelt bzw. steuert die Steuereinrichtung insbesondere die Drehzahl eines oder mehrerer Pumpenaggregate.

Die Drucksensoreinheiten sind vorzugsweise mit Kommunikationsmitteln versehen, welche eine drahtlose Kommunikation ermöglichen. D. h. die Drucksensoreinheiten können ein Funkmodul beinhalten, um Daten über größere Entfernungen übertragen zu können. Das Funkmodul kann beispielsweise zur Kommunikation in einem Mobilfunknetz ausgebildet sein und die Übertragung von Messwerten der Drucksensoreinheiten beispielsweise nach dem SMS-Standard in dem Mobilfunknetz ermöglichen. So können üblicherweise überall verfügbare Kommunikationsstrukturen zur Datenübertragung genutzt werden. Es ist jedoch auch denkbar, andere Funkstandards oder eine drahtgebundene Kommunikation vorzusehen. Dazu könnten die Drucksensoreinheiten mit Kommunikationsschnittstellen versehen sein, welche beispielsweise zur Datenübertragung über ein kabelgebundenes oder ein anderes geeignetes Datennetz ausgebildet sind.

Erfindungsgemäß sind die Steuereinrichtung und die Drucksensoreinheiten jedoch nicht so verknüpft, dass eine Steuerung oder Regelung auf Grundlage aktuell von den Drucksensoreinheiten erfassten Druckwerten erfolgt. Eine solche Regelung in Echtzeit würde eine kontinuierliche Datenübertragung von allen Drucksensoreinheiten zu der Steuereinrichtung für die Pumpeinrichtung erfordern, was recht aufwändig wäre. Um dies zu vermeiden, ist erfindungsgemäß die Steuereinrichtung mit einem Modellbildungsmodul versehen, welches Modelle für Teilbereiche des Wasserversorgungsnetzes erzeugt, welche dann der Steuerung bzw. Regelung der Pumpeinrichtung zugrundegelegt werden. D. h. erfindungsgemäß erfolgt die aktuelle Regelung der Pumpeinrichtung auf Grundlage von in der Steuereinrichtung hinterlegten Modellen, sodass keine laufende Kommunikation mit externen, weit beabstandeten Sensoren, wie den Drucksensoreinheiten erforderlich ist. Die mehreren Drucksensoreinheiten sind vorzugsweise nahe der Verbrauchsstellen an den von der Pumpeinrichtung beabstandeten kritischen Punkten im Wasserversorgungsnetz angeordnet, an denen ein gewünschter Minimaldruck sichergestellt und überprüft werden soll. Erfindungsgemäß wird für die Steuerung der Pumpeinrichtung das Wasserversorgungsnetz in mehrere Teilbereiche aufgeteilt, wobei verschiedenen Teilbereichen, welche hinsichtlich Einhaltung eines minimalen Druckwertes als kritisch einzustufen sind, jeweils zumindest eine Drucksensoreinheit an einem kritischen Punkt in diesem Teilbereich zugeordnet wird. Dabei wird die Drucksensoreinheit in dem Teilbereich bevorzugt an einem kritischen Punkt, in der Regel an einem von der Pumpeinrichtung beabstandeten Punkt des Teilbereiches angeordnet.

Das Modellbildungsmodul ist erfindungsgemäß so ausgebildet, dass für einzelne Teilbereiche, denen jeweils zumindest eine Drucksensoreinheit zugeordnet ist, jeweils ein einzelnes individuelles Modell nur für diesen Teilbereich erstellt werden kann. Zur Erstellung eines solchen Modells ist das Modellbildungsmodul so ausgebildet, dass es der Modellerstellung mehrere Druckmesswerte einer dem jeweiligen Teilbereich zugeordneten Drucksensoreinheit zugrundelegt. Es handelt sich dabei bevorzugt um Druckmesswerte, welche zu verschiedenen, vorzugsweise definierten Zeitpunkten erfasst werden. Dabei kann es sich z. B. über mehrere über den Tag verteilt aufgenommene Druckmesswerte handeln. Dabei werden zweckmäßigerweise Druckmesswerte gerade zu solchen Zeitpunkten aufgenommen, welche als kritisch anzusehen sind, d. h. Zeitpunkten, an welchen die Einhaltung eines gewünschten Mindestdruckes in dem jeweiligen Teilbereich als problematisch anzusehen ist. Das Modellbildungsmodul ist so ausgestaltet, dass es auf diese Weise für zumindest zwei Teilbereiche jeweils ein repräsentierendes Modell erzeugt, wobei das Modell den Druckverlust in dem jeweiligen Teilbereich zwischen dem Drucksensor ausgangsseitig der Pumpeinrichtung und der Drucksensoreinheit in diesem Teilbereich repräsentiert. Dieses Modell kann dann der Steuerung bzw. Regelung der Pumpeinrichtung von der Steuereinrichtung zugrundegelegt werden, da die Steuereinrichtung aus dem Modell entnehmen kann, wie der Druckverlust in einem jeweiligen Teilbereich in einem bestimmten Betriebszustand des Wasserversorgungsnetzes voraussichtlich sein wird. Die Steuereinrichtung kann dann auf dieser Grundlage unter Berücksichtigung mehrerer, vorzugsweise aller Modelle der verschiedenen Teilbereiche die zentrale Pumpeinrichtung so steuern bzw. regeln, dass der Druckverlust in sämtlichen Teilbereichen ausreichend kompensiert wird, um in allen Teilbereichen vorzugsweise einen gewünschten Minimaldruck sicherstellen zu können. Erfindungsgemäß ist vorzugsweise das gesamte Wasserversorgungsnetz in verschiedene Teilbereiche aufgeteilt und jedem Teilbereich ist eine Drucksensoreinheit zugeordnet und für jeden dieser Teilbereiche wird ein einzelnes Modell erzeugt, welches den Druckverlust von der zentralen Pumpeinheit zu der Drucksensoreinheit in dem jeweiligen Teilbereich repräsentiert. Die Steuerung bzw. die Regelung der Pumpeinheit erfolgt durch die Steuereinrichtung dann weiter bevorzugt auf Grundlage sämtlicher Modelle. Für den Fall, dass nicht das gesamte Wasserversorgungsnetz in solche Teilbereiche aufgeteilt wird, ist es jedoch bevorzugt, dass zumindest für die kritischen Teile des Wasserversorgungsnetzes, in welchen ein gewünschter Minimaldruck eingehalten werden muss und schwierig einzuhalten ist, solche Teilbereiche mit einzelnen Modellen gebildet werden. So sind erfindungsgemäß immer zumindest zwei Teilbereiche mit einem zugehörigen Modell vorgesehen, welche dann von der Steuereinrichtung der Regelung der Pumpeinrichtung zugrundegelegt werden.

Der beschriebenen Modellerstellung liegt die Erkenntnis zugrunde, dass bei einem Wasserversorgungsnetz, welches aus einer Vielzahl von im Vergleich zum Gesamtnetz sehr kleinen Verbrauchern besteht, die Betriebsbedingungen des Gesamtnetzes im Wesentlichen konstant sind, d. h. die Betriebsbedingungen unterscheiden sich beispielsweise in der Tageszeit, sind jedoch regelmäßig wiederkehrend im Wesentlichen gleich. Dies gilt insbesondere deshalb, da die einzelnen Verbraucher ein im Wesentlichen konstantes bzw. sich regelmäßig, beispielsweise täglich wiederholendes Verbrauchsprofil aufweisen. Bei der Betrachtung von Teilbereichen bei der Modellerstellung wird es darüber hinaus möglich, die Modelle flexibel an dennoch auftretende Änderungen anzupassen.

Das Modellbildungsmodul ist derart ausgebildet, dass die erzeugten Modelle jeweils den Druckverlust von der Pumpeinrichtung bis zu der Position der zugehörigen Drucksensoreinheit in Abhängigkeit der Zeit und des Durchflusses der Pumpeinrichtung abbilden. Dabei wird davon ausgegangen, dass der Drucksensor den Druck ausgangsseitig der Pumpeinrichtung erfasst, d. h. tatsächlich bildet das Modell den Druckverlust zwischen dem Drucksensor und der Drucksensoreinheit ab. Die Zeit kann dabei beispielsweise einen Tagesverlauf darstellen, sodass anhand eines solchen Modells beispielsweise ersichtlich ist, zu welchen Tageszeiten ein bestimmter Druckverlust in dem von dem Modell repräsentierten Teilbereich des Wasserversorgungsnetzes zu erwarten ist. Darüber hinaus wird das Modell so erzeugt, dass es zusätzlich den Druckverlust über den Durchfluss darstellt. So kann für unterschiedliche Durchflüsse der zu erwartende Druckverlust in dem zu dem Modell zugehörigen Teilbereich aus dem Modell abgelesen werden. Auf Grundlage dieser Daten, welche die Steuereinrichtung später zur Regelung der Pumpeinrichtung den einzelnen Modellen entnimmt, kann die Pumpeinrichtung dann von der Steuereinrichtung entsprechend geregelt bzw. gesteuert werden, um einen gewünschten Minimaldruck in allen Teilbereichen sicherzustellen. Dabei muss dieser Minimaldruck nicht in sämtlichen Teilbereichen gleich sein, vielmehr kann in der Steuereinrichtung ein individueller Minimaldruck für jeden Teilbereich definierbar sein.

Vorzugsweise ist die Steuereinrichtung derart ausgebildet, dass sie die Pumpeinrichtung auf einen vorbestimmten Solldruck regelt, wobei die Steuereinrichtung ein Solldruckbestimmungsmodul aufweist, welches ausgebildet ist, diesen Solldruck abhängig von der Zeit und/oder dem Durchfluss der Pumpeinrichtung auf Grundlage der zuvor erstellten, den Druckverlust repräsentierenden Modelle zu ermitteln. D. h. das Solldruckbestimmungsmodul weist bevorzugt einen Speicher auf, aus dem gewünschte Minimaldruckwerte für die einzelnen Teilbereiche entnommen werden können. Anschließend kann das Solldruckbestimmungsmodul dann unter Berücksichtigung beispielsweise der aktuellen Tageszeit und/oder des aktuellen Durchflusses aus den einzelnen Modellen der Teilbereiche den erwartungsgemäß bei diesen Betriebsbedingungen bzw. zu diesem Zeitpunkt auftretenden Druckverlust entnehmen und daraus dann bestimmen, welcher Solldruck ausgangsseitig der Pumpeinrichtung herrschen muss, um die auftretenden Druckverluste kompensieren und die gewünschten Minimaldrücke in den einzelnen Teilbereichen sicherzustellen.

Dazu ist das Solldruckbestimmungsmodul weiter bevorzugt derart ausgebildet, dass es einen Solldruck für die Pumpeinrichtung in der Weise ermittelt, dass für jeden der Teilbereiche des Wasserversorgungsnetzes der gewünschte Minimaldruck mit dem aus dem zugehörigen Modell ermittelten Druckverlust zu einem Summendruckwert addiert wird und der höchste der auf diese Weise ermittelten Summendruckwerte als Solldruck angewendet wird. D. h. es wird basierend auf einem gewünschten Minimaldruck, welcher in einem Speicher des Solldruckbestimmungsmoduls oder einem Speicher, auf den das Solldruckbestimmungsmodul zugreifen kann, hinterlegt ist, unter Heranziehung des jeweiligen Modells für jeden Teilbereich des Wasserversorgungsnetzes zunächst ein Summendruckwert ermittelt, welcher dem Solldruck ausgangsseitig der Pumpeinrichtung entspricht, welcher erreicht werden muss, um den Druckverlust in dem jeweiligen Teilbereich ausgleichen und den gewünschten Minimaldruck sicherstellen zu können. Wenn dann für jeden Teilbereich ein solcher Summendruckwert gebildet wird und aus diesen der höchste Summendruckwert als Sollwert ausgewählt wird, auf welchen die Pumpeinrichtung dann geregelt wird, wird sichergestellt, dass in jedem der Teilbereiche zumindest der gewünschte Minimaldruck erreicht wird. In einigen Teilbereichen wird gegebenenfalls ein höherer Enddruck erreicht.

Das Solldruckbestimmungsmodul dient vorzugsweise dazu, eine Regelkurve zu generieren, nach der das oder die Pumpenaggregate dann geregelt werden. Dies kann wie vorangehend beschrieben, als Definition einzelner Solldruckwerte in Abhängigkeit des Durchflusses erfolgen. Somit wird praktisch eine Regelkurve, welche die Abhängigkeit des Druckes vom Durchfluss beschreibt vom Solldruckbestimmungsmodul generiert. Das Solldruckbestimmungsmodul bildet dabei ein Regelkurvenbestimmungsmodul.

Das Modellbildungsmodul ist vorzugsweise derart ausgestaltet, dass es in zeitlichen Abständen die gebildeten Modelle auf Grundlage neuerer von den Drucksensoreinheiten bereitgestellter Druckwerte aktualisiert. So kann beispielsweise täglich eine Aktualisierung der Modelle durchgeführt werden. Dadurch, dass für einzelne Teilbereiche einzelne Modelle erstellt werden, ist darüber hinaus eine sehr flexible Aktualisierung möglich, da stets nur einzelne Teilmodelle angepasst werden müssen. Darüber hinaus ermöglicht die Aufteilung des Wasserversorgungsnetzes in einzelne Teilbereiche mit einzelnen Teilmodellen eine insgesamt genauere und flexiblere Regelung, da zunächst jedes Modell eines Teilbereiches unabhängig betrachtet wird und dann erst am Ende nach Betrachtung sämtlicher Modelle, wie vorangehend beschrieben, von dem Solldruckbestimmungsmodul der Druck bestimmt wird, welcher ausgangsseitig der Pumpeinrichtung herrschen muss, um sämtlichen Modellen bzw. sämtlichen zu erwartenden Druckverlusten gerecht zu werden. Auf diese Weise kann deutlich flexibler auf Veränderungen der zu erwartenden Druckverluste in einzelnen Teilbereichen oder ein Steuerelement reagiert werden.

Das beschriebene Modellbildungsmodul und das beschriebene Solldruckbestimmungsmodul können jeweils bevorzugt als Software-Module innerhalb der Steuereinrichtung ausgebildet sein. Sie können auch gemeinsam in eine Software-Anwendung integriert sein.

Gemäß einer bevorzugten Ausführungsform sind die Drucksensoreinheiten jeweils mit einem Messwertspeicher ausgestattet, welcher geeignet ist, mehrere Druckmesswerte jeweils mit einem Zeitstempel zu speichern. Durch einen solchen Messwertspeicher kann die Kommunikation zwischen den Drucksensoreinheiten und der Steuereinrichtung bzw. dem Modellbildungsmodul vereinfacht werden. So können nämlich die Drucksensoreinheiten mehrere Druckmesswerte über einen gewissen Zeitraum speichern und dann sämtliche Druckmesswerte gemeinsam in einem Sendevorgang zu der Steuereinrichtung übertragen. Die Steuereinrichtung ist mit einem zu den Drucksensoreinheiten korrespondierenden Kommunikationsmodul versehen, beispielsweise einer Funkschnittstelle, welche mit einem herkömmlichen Mobilfunknetz kommunizieren kann. Die Drucksensoreinheiten können so ausgebildet sein, dass sie selbsttätig eine Datenübertragung zu der Steuereinrichtung veranlassen oder aber so ausgestaltet sein, dass die Daten von der Steuereinrichtung zu gewünschten Zeitpunkten abgefragt werden. Vorzugsweise ist der Messwertspeicher so ausgebildet, dass er die Daten eines gesamten Tages speichern kann, sodass nur einmal am Tag Daten von der Drucksensoreinheit zu der Steuereinrichtung übertragen werden. Sobald die Steuereinrichtung die Daten empfangen hat, kann dann deren Modellbildungsmodul ein entsprechendes Modell für den zugehörigen Teilbereich erstellen oder gegebenenfalls auf Grundlage der neueren Messwerte der Drucksensoreinheit aktualisieren. Um ein Modell möglichst genau auszubilden, sind die Drucksensoreinheiten weiter bevorzugt so ausgebildet, dass sie Druckwerte vorzugsweise über den ganzen Tag, insbesondere gleichmäßig verteilt erfassen. So können beispielsweise stündlich oder halbstündlich Druckmessungen vorgenommen werden. Jede Messung wird vorzugsweise mit einem Zeitstempel versehen, sodass nach späterer Datenübertragung in der Steuereinrichtung genau erfassbar ist, zu welchem Zeitpunkt von der Druckmesseinheit welcher Druckwert erfasst wurde.

Wie beschrieben, ist jede Drucksensoreinheit mit einem geeigneten Kommunikationsmodul ausgestattet, welches zur Kommunikation mit der Steuereinrichtung geeignet ist, welche dazu mit einem korrespondierenden Kommunikationsmodul versehen ist. Die Kommunikationsmodule weisen geeignete Schnittstellen für die Datenübertragung, beispielsweise nach einem Mobilfunkstandard oder Datennetzwerkstandard auf.

Gemäß einer bevorzugten Ausführungsform der Erfindung kann die Steuereinrichtung Teil einer Pumpeinrichtung und insbesondere eines Pumpenaggregates sein. So kann die Steuereinrichtung in ein Pumpenaggregat integriert sein, beispielsweise in einem direkt am Pumpenaggregat angeordneten Elektronikgehäuse untergebracht sein. Für den Fall, dass die Pumpeinrichtung mehrere Pumpenaggregate umfasst, ist es auch möglich, dass die Steuereinrichtung in eines der Pumpenaggregates integriert ist und gleichzeitig die weiteren Pumpenaggregate steuert bzw. regelt.

Gemäß einer weiteren bevorzugten Ausführungsform der Erfindung weist die Steuereinrichtung ein Leckage-Detektionsmodul auf. Auch ein solches Modul kann als Softwaremodul in der Steuereinrichtung realisiert sein. Das Leckage-Detektionsmodul ist bevorzugt derart ausgestaltet, dass es über den Durchflusssensor zu einem wiederkehrenden vorbestimmten Zeitpunkt oder in einer wiederkehrenden vorbestimmten Zeitspanne, vorzugsweise täglich den Durchfluss erfasst und den erfassten Durchfluss mit einem Grenzwert und/oder mit einem oder mehreren vorangehenden Zeitpunkten oder Zeitspannen erfassten Durchflüssen vergleicht. Bei dem wiederkehrenden Zeitpunkt kann es sich beispielsweise um eine bestimmte tägliche Uhrzeit handeln, sodass jeden Tag zu dieser Uhrzeit der Durchfluss erfasst wird. Dabei kann der Durchfluss exakt zu diesem Zeitpunkt bestimmt werden oder es kann beispielsweise der Durchfluss in einer vorbestimmten Zeitspanne erfasst werden und ein Mittelwert gebildet werden. Vorzugsweise liegt der wiederkehrende Zeitpunkt nachts, da zu diesem Zeitpunkt der Durchfluss in einem Wasserversorgungsnetz in der Regel gering ist. Durch den Vergleich des so erfassten Durchflusses mit Grenzwerten und/oder vorangehend zu entsprechenden Zeitpunkten oder in entsprechenden Zeitspannen erfassten Durchflüssen sind Veränderungen der Durchflüsse detektierbar, welche auf eine Leckage schließen lassen. Wird beispielsweise täglich zu einer bestimmten Uhrzeit von dem Leckage-Detektionsmodul der aktuelle Durchfluss erfasst, so sollte der Durchfluss statistisch über mehrere Tage im Wesentlichen gleich sein. Kommt es jedoch über mehrere Tage zu einer kontinuierlichen Erhöhung oder gegebenenfalls zu einer sprunghaften Erhöhung, welche vom längerfristigen Durchschnitt abweicht, so lässt sich hieraus beispielsweise auf eine Leckage schließen. Auch können gegebenenfalls Grenzwerte in der Steuereinrichtung festgelegt sein, bei deren Überschreiten eine Leckage angenommen wird.

Weiter bevorzugt weist die Steuereinrichtung ein Leckage-Detektionsmodul auf, welches derart ausgestaltet ist, dass es zum Bestimmen des wahrscheinlichen Ortes einer Leckage für die einzelnen Teilbereiche jeweils einen tatsächlichen Druckverlust auf Grundlage von Messwerten des Drucksensors sowie der jeweiligen, zu dem jeweiligen Teilbereich zugehörigen Drucksensoreinheit bestimmt und diesen tatsächlichen Druckverlust mit einem aus dem zugehörigen Modell abgeleiteten erwarteten Druckverlust vergleicht. So kann die Aufteilung des Gesamtnetzes in einzelne Teilbereiche mit zugehörigen Modellen für den Druckverlust dazu genutzt werden, eine Leckage zu lokalisieren bzw. den wahrscheinlichen Ort der Leckage auf zumindest einen der Teilbereiche einzugrenzen. Dies kann durch Vergleich des tatsächlich zu einem bestimmten Zeitpunkt erfassten Druckverlustes in dem jeweiligen Teilbereich mit dem zu erwartenden Druckverlust zu diesem Zeitpunkt, welcher sich aus dem zugehörigen Modell ergibt, erfolgen. Beispielsweise kann eine starke Abweichung von dem Modell ein Indikator dafür sein, dass ein Druckverlust in diesem Teilbereich aufgetreten ist.

So ist das Leckage-Detektionsmodul weiter bevorzugt derart ausgebildet, dass es für denjenigen Teilbereich eine wahrscheinliche Leckage anzeigt, für welchen der tatsächliche Druckverlust gleich oder größer als der erwartete Druckverlust ist. Vorzugsweise ist das Leckage-Detektionsmodul so ausgebildet, dass es stets alle Modelle bzw. alle Teilbereiche berücksichtigt. Bei einer Leckage in einem der Teilbereiche wird sich erwartungsgemäß der Druckverlust in nur diesem Teilbereich vergrößern, während er sich in den anderen Teilbereichen nur wenig ändert oder verringert.

Besonders bevorzugt ist das Leckage-Detektionsmodul so ausgebildet, dass eine Leckage in folgenden zwei Schritten detektiert wird. In einem ersten Schritt wird, wie vorangehend beschrieben, durch Vergleich der Durchflüsse zunächst einmal detektiert, ob überhaupt eine Leckage im Gesamtnetz wahrscheinlich ist. Sollte eine solche Wahrscheinlichkeit von dem Leckage-Detektionsmodul in der vorangehend beschriebenen Weise festgestellt werden, wird dann bevorzugt im zweiten Schritt eine Lokalisierung unter Zuhilfenahme der Modelle für die einzelnen Teilbereiche durchgeführt, wie es vorangehend beschrieben wurde. Wird somit eine wahrscheinliche Leckage aufgrund einer Erhöhung des Durchflusses festgestellt und dann in einem zweiten Schritt festgestellt, dass sich gegenüber dem Modell der Druckverlust in einem der Teilbereiche erhöht hat, so ist es wahrscheinlich, dass die Leckage in diesem Teilbereich gegeben ist.

Gemäß einer weiteren bevorzugten Ausführungsform weist die Steuereinrichtung ein Leckage-Detektionsmodul auf, welches derart ausgestaltet ist, dass es für die einzelnen Teilbereiche bei einer Aktualisierung des zugehörigen Modells für den zu erwartenden Druckabfall in diesem Teilbereich durch das Modellbildungsmodul den zu erwartenden Druckabfall für einen oder mehrere bestimmte Betriebszustände gemäß einem aktualisierten Modell mit dem zu erwartenden Druckabfall gemäß einem vorherigen Modell vergleicht und auf Grundlage einer Veränderung des zu erwartenden Druckabfalls eine wahrscheinliche Leckage in den zugehörigen Teilbereich erkennt. D. h. gemäß diesem Verfahren zur Lokalisierung der Leckage in einem der Teilbereiche wird nicht eine aktuelle Messung des Druckabfalls mit einem aus einem bestehenden Modell abgeleiteten zu erwartenden Wert für den Druckabfall verglichen, sondern es werden die sich aus den Modellen ergebenden Werte miteinander verglichen und zwar für ein älteres Modell und für ein aktualisiertes Modell. Da in die Aktualisierung eventuell auftretende Leckagen einfließen, wird sich das aktualisierte Modell durch die Leckage verändern, d. h. das aktualisierte Modell wird einen höheren Druckabfall erwarten lassen als es in einem älteren Modell der Fall war. Diese Änderung kann zur Detektion und insbesondere Lokalisation einer Leckage herangezogen werden. Dieser Vergleich wird zweckmäßigerweise für alle Teilbereiche auf Grundlage der für diese geltenden Modelle durchgeführt. Wenn dann in nur einem Teilbereich eine Veränderung festgestellt wird, ist es wahrscheinlich, dass dort eine Leckage gegeben ist.

Gegenstand der Erfindung ist darüber hinaus ein entsprechendes Verfahren zur Regelung einer Pumpeinrichtung. Ein solches Verfahren lässt sich insbesondere mit einem Pumpensystem realisieren, wie es vorangehend beschrieben wurde. Insofern wird im Hinblick auf bevorzugte Verfahrensmerkmale auch auf die vorangehende Beschreibung des Verfahrensablaufes anhand des Pumpensystems verwiesen.

Das erfindungsgemäße Verfahren dient zur Regelung zumindest einer Pumpeinrichtung in einem Wasserversorgungsnetz. Die Pumpeinrichtung und das Wasserversorgungsnetz können dabei in der oben anhand des Pumpensystems beschriebenen Weise ausgestaltet sein. Erfindungsgemäß wird das Wasserversorgungsnetz für die Regelung in mehrere Teilbereiche aufgeteilt, welche für die Druckregelung in bestimmtem Umfang separat betrachtet werden. In zumindest zwei solcher Teilbereiche wird an jeweils zumindest einem kritischen Punkt zu mehreren Zeitpunkten der Druck erfasst. Gleichzeitig wird der Druck ausgangsseitig der Pumpeinrichtung erfasst. So kann basierend auf diesen Druckmesswerten der Druckverlust für zumindest zwei der Teilbereiche zu verschiedenen Zeitpunkten, zu denen der Druck in den Teilbereichen und gleichzeitig der Druck ausgangsseitig der Pumpeinrichtung gemessen wurde, bestimmt werden. Es werden somit Druckverluste für die einzelnen Teilbereiche zu bestimmten Zeitpunkten und zu bestimmten Betriebszuständen, welche zu den Zeitpunkten herrschen, an denen die Druckverluste gemessen wurden, erfasst. Auf Grundlage dieser Daten, insbesondere den bestimmten Druckverlusten wird für die genannten zumindest zwei Teilbereiche jeweils ein den Druckverlust repräsentierendes Modell erstellt. Das Modell gibt einen zu erwartenden Druckverlust für bestimmte Betriebszuständen, insbesondere für bestimmte Zeitpunkte und/oder Durchflüsse an. Die Pumpeinrichtung wird anschließend erfindungsgemäß auf Grundlage der erstellten Modelle geregelt. D. h. bei der Steuerung bzw. Regelung der Pumpeinrichtung werden nicht aktuell tatsächlich gemessene Druckwerte im Wasserversorgungsnetz an allen kritischen Punkten berücksichtigt, sondern es wird stattdessen auf die zuvor erstellten Modelle zurückgegriffen. Dies hat den Vorteil, dass nicht an allen kritischen Punkten des Wasserversorgungsnetzes ständige kontinuierliche Druckmessungen mit einer Rückmeldungen an die Steuerung der Pumpeinrichtung erforderlich sind.

Gleichzeitig mit dem Erfassen des Druckes wird an den genannten kritischen Punkten der Teilbereiche der Durchfluss der Pumpeinrichtung, d. h. der Gesamtdurchfluss für das Wasserversorgungsnetz bestimmt und die Modelle werden so erstellt, dass sie den Druckverlust in den zugehörigen Teilbereich in Abhängigkeit der Zeit und des Durchflusses repräsentieren. Dabei repräsentiert das Modell die Abhängigkeit zum Durchfluss des Gesamtnetzes, d. h. es ist nicht erforderlich, den Durchfluss für die einzelnen Teilbereiche zu erfassen, sodass in diesen lediglich an den kritischen Punkten Druckmessungen durchgeführt werden müssen. Für die Regelung bzw. Steuerung der Pumpeinrichtung kann dann, beispielsweise anhand des aktuelle gemessenen Durchflusses und der Zeit ein zu erwartender Druckverlust bestimmt werden, auf dessen Grundlage dann der Ausgangspunkt der Pumpeinrichtung eingestellt werden kann.

Vorzugsweise wird zur Regelung der Pumpeinrichtung der aktuelle Durchfluss der Pumpeinrichtung erfasst und es werden für den aktuellen Zeitpunkt und den aktuell erfassten Durchfluss anhand der zuvor erstellten Modelle die in sämtlichen Teilbereichen zu erwartenden Druckverluste bestimmt und anschließend wird ein Ausgangsdruck der Pumpeinrichtung auf einen Solldruck geregelt, welcher diese Druckverluste kompensiert. So können, wie oben beschrieben, die zu erwartenden Druckverluste mit den vorgegebenen Minimaldrücken für die einzelnen Teilbereiche addiert werden und dann aus diesen addierten Druckwerten der höchste Druckwert als Solldruck für die Regelung der Pumpeinrichtung zugrundegelegt werden. D. h. der Ausgangsdruck der Pumpeinrichtung wird vorzugsweise so eingestellt, dass der höchste auftretende Druckverlust in einem der Teilbereiche gerade noch kompensiert werden kann.

Gemäß einer weiteren bevorzugten Ausgestaltung des Verfahrens wird der Druck an den kritischen Punkten in den einzelnen Teilbereichen zu mehreren Zeitpunkten erfasst und diese Messwerte werden gespeichert und eine Auswertung zum Erstellen oder zur Aktualisierung des zugehörigen Modells erfolgt nach einer bestimmten Anzahl von Messungen oder einer bestimmten Zeitspanne. Auf diese Weise kann die Datenübertragung optimiert bzw. vereinfacht werden, da nicht für jede Messung unmittelbar ein Datensatz von dem kritischen Punkt, an welchem die Messung erfolgte, zu einer zentralen Steuereinrichtung übertragen werden muss. Stattdessen können zunächst viele Messwerte gesammelt und dann gemeinsam übertragen werden, sodass beispielsweise eine Datenübertragung einmal am Tag ausreichend ist.

Weiter bevorzugt kann bei dem Verfahren eine Leckage detektiert werden, indem in dem Wasserversorgungsnetz regelmäßig vorzugsweise täglich der Durchfluss der Pumpeinrichtung zu einem bestimmten Zeitpunkt oder in einer bestimmten Zeitspanne erfasst wird und die so erfassten Durchflussmesswerte untereinander oder mit zumindest einem vorbestimmten Grenzwert verglichen werden. So kann beispielsweise täglich zu einer bestimmten Uhrzeit, insbesondere nachts der Durchfluss erfasst werden und diese erfassten Durchflusswerte können über mehrere Tage verglichen werden. Kommt es zu einem übermäßigen Anstieg der Durchflussmesswerte zu den sich wiederholenden Zeitpunkten kann dies ein Anzeichen für einen Leckage sein. Auch kann bei Überschreiten eines bestimmten Grenzwertes für den Durchfluss auf eine Leckage geschlossen werden.

Gemäß einer weiteren bevorzugten Ausgestaltung des Verfahrens ist es ebenfalls möglich, einen wahrscheinlichen Ort einer Leckage in dem Wasserversorgungsnetz zumindest auf einen der Teilbereiche einzugrenzen. Dies erfolgt vorzugsweise durch den Vergleich eines tatsächlich für einen Teilbereich gemessenen Druckverlustes mit dem nach dem zugehörigen Modell für diesen Teilberiech zu erwartenden Druckverlust. Dabei wird vorzugsweise dann eine Leckage in einem Teilbereich festgestellt, wenn in diesem der tatsächliche Druckverlust gleich oder größer dem zu erwartenden Druckverlust ist. Dies gilt insbesondere dann, wenn in allen anderen Teilbereichen der tatsächliche Druckverlust dem erwarteten Druckverlust entspricht oder aber geringer als der erwartete Druckverlust ist. Insofern hat die Aufteilung des Gesamtnetzes in verschiedene Teilbereiche mit einzelnen Modellen für den Druckverlust dieser Teilbereiche den Vorteil, dass diese Modelle neben der Regelung bzw. Steuerung der Pumpeinheit gleichzeitig zum Erkennen und Lokalisieren einer Leckage genutzt werden können. Der wahrscheinliche Ort einer Leckage in dem Wasserversorgungsnetz kann so vorzugsweise durch den Vergleich eines für einen Teilbereich in einem vorbestimmten Zeitraum gemessenen durchschnittlichen Druckverlustes mit dem nach dem zugehörigen Modell für diesen Teilbereich im selben Zeitraum zu erwartenden Druckverlust erfolgen, wobei vorzugsweise dann eine Leckage in einem Teilbereich festgestellt wird, wenn in diesem der gemessene durchschnittliche Druckverlust gleich oder größer dem zu erwartenden durchschnittlichen Druckverlust ist. D. h. gemäß dieser Variante des Verfahrens wird nicht der aktuelle Druckverlust betrachtet, sondern es wird ein längerer Zeitraum betrachtet, in welchem der Durchschnitt für den Druckverlust gebildet wird. Im Modell wird dann der durchschnittliche Druckverlust für den gleichen Zeitraum ausgelesen und diese beiden Durchschnittswerte werden miteinander verglichen. Auf diese Weise kann eine höhere Erkennungsgenauigkeit realisiert werden, da zeitlich begrenzte Abweichungen so außer Betracht bleiben.

Alternativ oder zusätzlich kann der Ort einer Leckage in dem Wasserversorgungsnetz durch den Vergleich des zu erwartenden Druckverlustes in einem Teilbereich für einen oder mehrere Betriebszustände gemäß einem ersten Modell mit dem zu erwartenden Druckverlust für dieselben Betriebszustände desselben Teilbereiches gemäß einem zweiten aktualisierten Modell bestimmt werden. D. h. es kann beispielsweise dann, wenn ein Modell für einen Teilbereich täglich aktualisiert wird, das aktualisierte Modell mit dem Modell des Vortages verglichen werden. Ist in dem neuen Modell der zu erwartende Druckverlust für einen oder mehrere bestimmte Zeitpunkte, Zeiträume oder Betriebszustände beispielsweise höher als im Modell des Vortages, so kann dies eine Leckage anzeigen. Insbesondere können hier auch Modelle über mehrere Tage oder über einen längeren Zeitraum miteinander verglichen werden, um eine höhere Erkennnungsgenauigkeit zu realisieren.

Nachfolgend wird die Erfindung beispielhaft anhand der beigefügten Figuren beschrieben:

Fig. 1   schematisch ein Wasserversorgungsnetz mit einem erfindungsgemäßen Pumpensystem,

Fig. 2   schematisch die Funktion eines erfindungsgemäßen Pumpensystems,

Fig. 3   ein Diagramm, in welchem der Solldruck für verschiedene Durchflüsse aufgetragen ist,

Fig. 4   in zwei Diagrammen die nächtliche Durchflussmessung,

Fig. 5   schematisch die Lokalisierung einer Leckage gemäß einer ersten Ausführungsform und

Fig. 6   schematisch die Lokalisierung einer Leckage gemäß einer zweiten Ausführungsform.

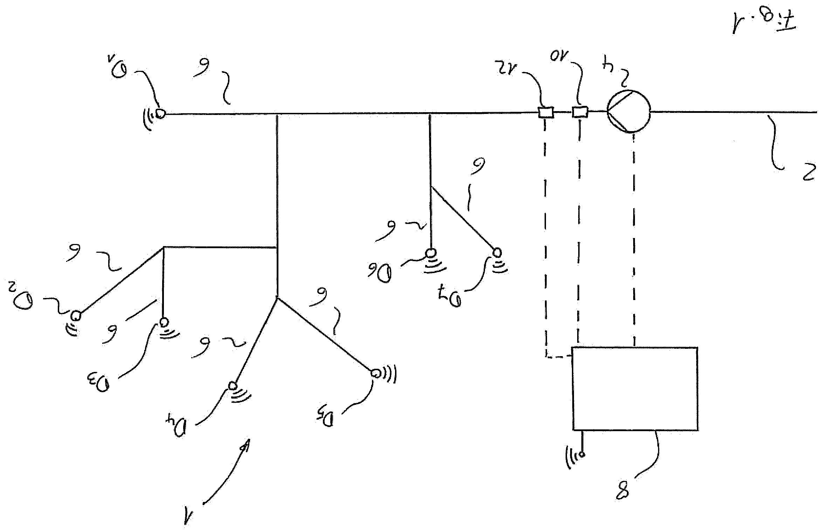

Fig. 1 zeigt schematisch ein Wasserversorgungsnetz mit einem erfindungsgemäßen Pumpensystem. Das Wasserversorgungsnetz weist eine Zuleitung 2 auf, in welcher eine Pumpeinheit 4, beispielsweise ein oder mehrere Pumpenaggregate angeordnet ist. Stromabwärts der Pumpeinheit 4 verzweigt sich das Wasserversorgungsnetz in mehrere Zweige 6. In den gezeigten einzelnen Zweigen 6 sind an kritischen Punkten Drucksensoreinheiten $D(D_1...D_n)$ angeordnet. In dem hier gezeigten Beispiel sind die Drucksensoreinheiten D mit Funkkommunikationsmodulen ausgestattet, welche eine Datenübertragung über ein Mobilfunknetz nach dem SMS-Standard zu einer Steuereinrichtung 8 ermöglichen. Die Drucksensoreinheiten D weisen darüber hinaus Messwertspeicher auf, in welchen zu verschiedenen Zeitpunkten gespeicherte Druckmesswerte mit einem Zeitstempel gespeichert werden, sodass die einzelnen Druckmesswerte genauen Zeitpunkten, zu welchen Sie erfasst wurden, zugeordnet werden können. Die Drucksensoreinheiten D sind so ausgebildet, dass sie einmal täglich die gespeicherten Druckmesswerte per Funk zu der Steuereinrichtung 8 übertragen. Die Drucksensoreinheiten D messen beispielsweise über den Tag verteilt halbstündlich den Druckwert an den kritischen Punkten. Es können auch mehr oder weniger Druckmessungen erfolgen. Die Anzahl der Druckmessungen sollte so gewählt werden, dass über den Tag möglichst alle kritischen Betriebszustände ausreichend genau erfasst werden können.

Die Steuereinrichtung 8 dient zur Steuerung bzw. Regelung der Pumpeinheit 4. Insbesondere regelt die Steuereinrichtung 8 ein oder mehrere Pumpenaggregate der Pumpeinheit 4 in der Drehzahl so, dass ein gewünschter Ausgangsdruck auf der Druckseite der Pumpeinheit 4 erreicht wird. Dieser wird durch einen Drucksensor 10 erfasst. Ferner ist ein Durchflusssensor 12 vor der Verzweigung angeordnet, sodass er zentral den Durchfluss durch die Pumpeinheit 4 und somit durch das ganze stromabwärts gelegene Wasserversorgungsnetz erfasst. Der Drucksensor 10 und der Durchflussmesser 12 liefern ihre Messwerte an die Steuereinrichtung 8, wobei diese vorzugsweise eine kontinuierliche Messung ermöglichen. Der Drucksensor 10 und der Durchflusssensor 12 sind vorzugsweise in der Nähe der Steuereinrichtung 8 angeordnet, sodass hier eine Leitungsverbindung zur Datenübertragung vorgesehen sein kann.

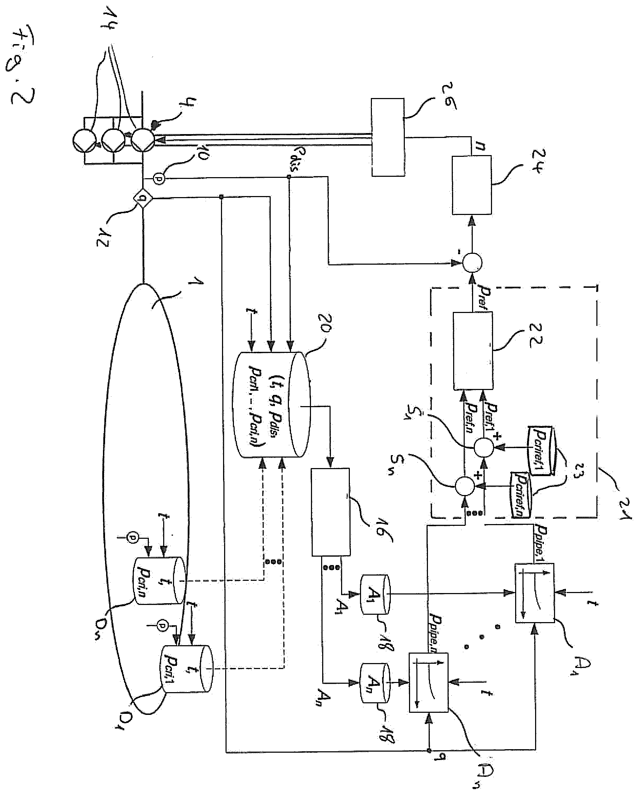

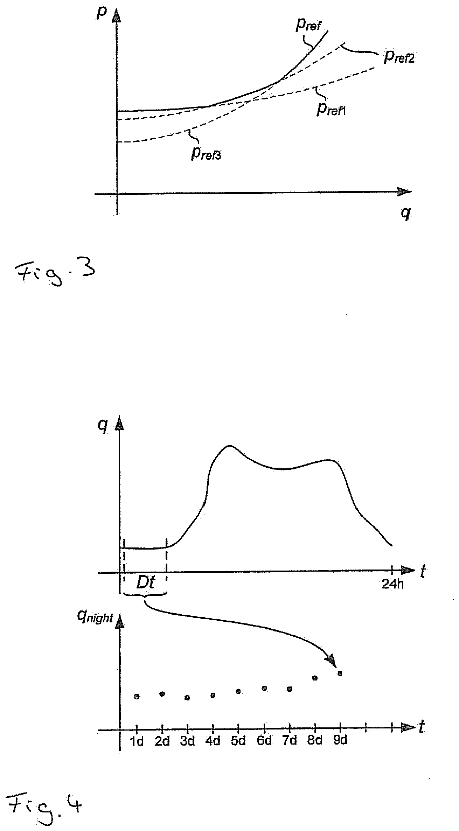

Anhand von Fig. 2 wird nun die erfindungsgemäße Regelung bzw. Steuerung der Pumpeinheit 4 näher beschrieben. In dem in Fig. 4 gezeigten Beispiel sind als Pumpeinheit mehrere Pumpenaggregate 14 gezeigt, welche parallel oder abwechselnd betrieben werden können, je nachdem welche Förderleistung gewünscht ist. Die Pumpeinheit 4 bildet somit eine Pumpstation, welche eine oder mehrere Pumpenaggregate 14 zur Druckerhöhung des Wassers aufweist. Die Steuerung erfolgt auf Grundlage mehrerer Modelle $A(A_1......A_n)$, welche den Druckverlust in einzelnen Teilbereiche des Wasserversorgungsnetzen 1 repräsentieren. Erfindungsgemäß wird für mehrere Drucksensoreinheiten D, in diesem Beispiel für alle Drucksensoreinheiten D jeweils ein zugehöriges Modell A für den Druckverlust zwischen dem Drucksensor 10 und der jeweiligen Drucksensoreinheit D erstellt. So werden verschiedene Modelle A für die einzelnen kritischen Punkte in verschiedenen Zweigen 6 des Wasserversorgungsnetzes 1 erzeugt, welche den Druckverlust in diesen Teilbereichen des Wasserversorgungsnetzes abhängig von der Zeit t und vom Durchfluss q im gesamten Wasserversorgungsnetz 1, welcher von dem Durchflusssensor 12 erfasst wird, repräsentieren.

Die Modelle A werden basierend auf den von den Drucksensoreinheiten D erfassten Druckwerten $p_{cri}(p_{cri,1}.....p_{cri,n})$ zu verschiedenen Zeitpunkten gebildet. Die Drucksensoreinheiten D erfassen zu mehreren Zeitpunkten, wie oben beschrieben beispielsweise alle halbe Stunde, den Druckwert. Diese erfassten Werte werden regemäßig, beispielsweise einmal am Tag der Steuereinrichtung 8 zugeführt. Dort werden als weitere Daten Druckmesswerte des Drucksensors 10, die Durchflussmesswerte des Durchflusssensors 12 sowie die zugehörige Zeit erfasst. Basierend auf diesen Daten werden in dem Modellbildungsmodul 16 die Modelle $A(A_1....A_n)$ gebildet. Die Modelle A werden in Parameterspeichern 18 in der Steuereinrichtung 8 für sämtliche Teilbereiche abgelegt. Jedes Mal, wenn von den Drucksensoreinheiten D neu erfasste Messwerte an die Steuereinrichtung 8 gesandt werden, werden diese wieder in dem Modellbildungsmodul 16 mit den erfassten Druckmesswerten von dem Drucksensor 10 und den Durchflussmesswerten von dem Durchflusssensor 12 verarbeitet und die erzeugten Modelle A aktualisiert. Bei der Verarbeitung im Modellbildungsmodul 16 wird dabei eine zeitliche Zuordnung sämtlicher Messwerte zu einzelnen Zeitpunkten vorgenommen, d. h. es wird jedem betrachteten Zeitpunkt ein Druckmesswert $p_{cri}$, ein Druckmesswert $p_{dis}$ des Drucksensors 10 sowie ein Durchflussmesswert q des Durchflusssensors 12 zugeordnet. Diese Zuordnung bildet das Modell A und wird in dem Speicher 18 aktualisiert gespeichert. Jedes der Modelle A gibt somit einen Druckverlust an, welcher zu einem bestimmten Zeitpunkt bei einem bestimmten Durchfluss q im Gesamtnetzwert in dem einzelnen Teilbereich zu erwarten ist. Dabei ist die Struktur jedes dieser Modelle z. B. gegeben durch:

$$p_{dis} - p_{cri} = a_0 + q^2\,(a_1 + a_2\,cos(\omega t) + a_3\,sin(\omega t) + a_4\,cos\,(2\omega t) + a_5$$

$$sin(2\omega t) + a_6\,cos(3\omega t) + a_7\,sin(3\omega t)$$

$p_{dis}$ entspricht dabei dem Druck am Drucksensor 10, $p_{cri}$ dem Druck an der Drucksensoreinheit D, q ist der Durchfluss am Durchflusssensor 12. Die Parameter a($a_0$,....$a_7$) werden in dem Modellbildungsmodul 16 auf Grundlage der erfassten Messwerte erzeugt. Der feste Parameter $\omega$ beschreibt die Frequenz der täglichen Variationen in dem Modell.

Für die Modellbildung werden vorzugsweise Daten von nur einem Tag berücksichtigt, sodass von den Drucksensoreinheiten D sowie in einem Datenspeicher 20 der Steuereinrichtung 8 die gemessenen Messwerte nur über eine Tag gespeichert werden müssen. So wird das zu verarbeitende Datenvolumen gering gehalten.

Die Regelung der Pumpeinheit 4 erfolgt auf Grundlage des aktuell gemessenen Durchflusses q und der Zeit t in der Weise, dass aus den so gebildeten Modellen A die für diesen Durchfluss und zu diesen Zeitpunkt zu erwartenden Druckverluste $p_{pipe}$($p_{pipe,1}$....$p_{pipe,n}$) ausgelesen werden. In einem Solldruckbestimmungsmodul 21, welches Addierer S ($S_1$......$S_n$) Solldruckspeicher 23 sowie einen Vergleicher 22 aufweist, wird der Solldruck, welcher ausgangsseitig der Pumpenaggregat 14 erforderlich ist, ermittelt. Die zu erwarnten Druckverluste $P_{pipe}$ werden jeweils mit einem aus dem jeweiligen Solldruckspeicher 23 ausgelesenen zugehörigen Minimal- bzw. Referenzdruck $P_{criref}$, welcher an den kritischen Punkten, an welchen die Drucksensoreinheiten D angeordnet sind, jeweils erzielt werden soll, addiert. Dies erfolgt in den Additionsschritten S($S_1$,......$S_n$) in der Steuereinrichtung 8. Dort werden die jeweiligen Referenzdrücke $p_{criref}$($p_{criref,1}$....$p_{criref,n}$) mit den ermittelten zu erwartenden Druckverlusten $p_{pipe}$ addiert. Aus diesen Additionen werden die zu erzielenden Referenzdrücke für die einzelnen Teilbereiche $p_{ref}$($p_{ref,1}$.......$p_{ref,n}$) ermittelt. Diese werden dann in einem Vergleicher 22 miteinander verglichen und es wird der höchste ermittelte Referenzdruck $p_{ref}$ dem Drehzahlregler bzw. Drehzahlregelungsmodul 24 in der Steuereinrichtung 8 zugeführt. In diesem findet eine Regelung auf den Solldruck $p_{ref}$ unter Berücksichtigung des von dem Drucksensor 10 aktuell erfassten Druckes $p_{dis}$ statt. Der Drehzahlregler 24 gibt eine Drehzahl n für das oder die Pumpenaggregate 14 aus. Zusätzlich weist die Steuereinrichtung 8 in diesem Beispiel ein Auswahlmodul 26 auf, welches festlegt, ob ein oder mehrere Pumpenaggregate 14 und mit welcher Drehzahl n angetrieben werden und, wenn nicht alle Pumpenaggregate 14 genutzt werden, welches der Pumpenaggregate 14 eingesetzt wird. So kann eine gleichmäßige Auslastung der mehreren Pumpenaggregate 14 durch das Auswahlmodul 26 erreicht werden.

Die Verwendung der Modelle für die einzelnen Teilbereiche des Wasserversorgungsnetzes 1, welche jeweils einen oder mehreren Zweigen 6 entsprechen, in denen jeweils eine Drucksensoreinheit D angeordnet ist, hat den Vorteil, dass der tatsächliche Ausgangsdruck der Pumpeinheit 6 sehr genau den tatsächlichen Bedürfnissen angepasst werden kann und so stets ein ausreichender Druck in den einzelnen Teilbereichen sichergestellt und gleichzeitig der Energieeinsatz minimiert werden kann. Darüber hinaus lassen sich die einzelnen Teilmodelle A durch Aktualisierung über die von den Drucksensoreinheiten D erfassten Daten flexibel an Änderungen des Bedarfes im Wasserversorgungsnetz 1 anpassen.

Bei dem Ausführungsbeispiel gemäß Fig. 2 ist zu verstehen, dass beliebig viele Teilbereiche mit Drucksensoreinheiten D und entsprechend beliebig viele Modelle A vorhanden sein können. Die Signalverarbeitung und die Ermittlung des Referenzdruckes für die einzelnen Teilbereichen $P_{ref}$ erfolgt jeweils unabhängig, sodass eine entsprechende Anzahl von Addierern S und Solldruckspeichern 23 sowie Speichern 18 vorgesehen wird, was jeweils durch die drei Punkte zwischen den Signalfaden in der Fig. 2 angedeutet ist.

Fig. 3 zeigt in einem pq-Diagramm, in welchem der Druck über dem Durchfluss aufgetragen ist. Es ist zu erkennen, dass als Referenzdruck $p_{ref}$, auf welchen die Pumpeinheit 4 geregelt wird, stets der für den jeweiligen Durchfluss höchste Summendruckwert $p_{ref}$ ausgewählt wird. Der Referenzdruck $p_{ref}$, auf den die Pumpeinheit 4 geregelt wird, ist durch die durchgezogene Linie gekennzeichnet.

Die Steuereinrichtung 8 des Pumpensystems gemäß der Erfindung ermöglicht es darüber hinaus, mögliche Leckagen in dem Wasserversorgungsnetz 1 zu erfassen und zu lokalisieren. Dazu wird täglich in einem definierten Zeitintervall Dt beginnend zu einem bestimmten immer wieder kehrenden Zeitpunkt ein durchschnittlicher Durchflusswert an dem Durchflusssensor 12 von der Steuereinrichtung 8 erfasst (siehe Fig. 4). Dies erfolgt bevorzugt nachts, beispielsweise mitternachts, wenn der Durchfluss am geringsten und über mehrere Tage weitgehend konstant ist. Dieser Durchfluss Dt wird über mehrere Tage gespeichert und verglichen, wie im Diagramm unten in Fig. 4 für die Tage 1d bis 9d aufgetragen ist. Aus dem hier erkennbaren Anstieg des Durchflusses beginnend am Tag 4d bis zum Tag 9d lässt sich auf eine Leckage an einer Stelle des Wasserversorgungsnetzes 1 schließen. Erkennt die Steuereinrichtung 8 einen solchen Anstieg über mehrere Tage oder alternativ oder zusätzlich das Überschreiten eines vorbestimmten Grenzwertes wird hieraus auf eine Leckage geschlossen und die gegebenenfalls in geeigneter Weise signalisiert.

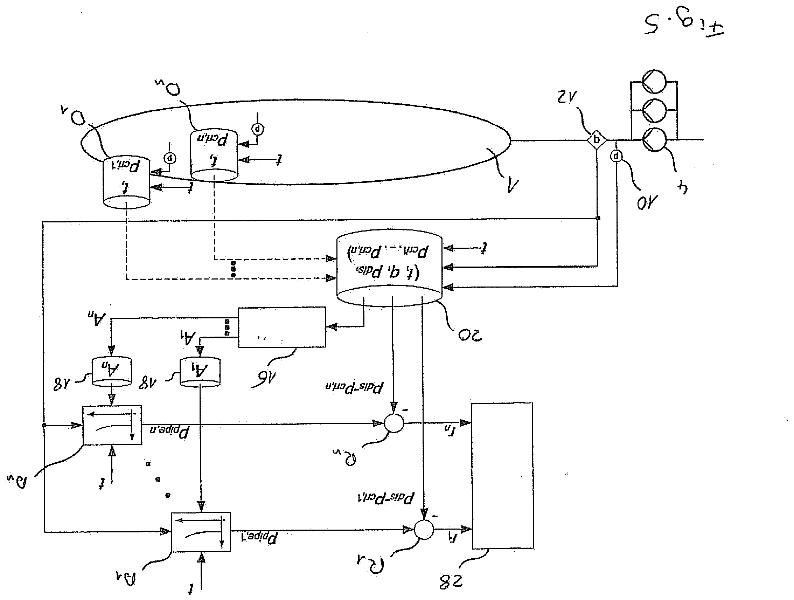

In einem nächsten Schritt ist es dann möglich, anhand der gebildeten Modelle A zu lokalisieren, in welchem der Teilbereiche, welche den Druckmesseinheiten D zugeordnet sind, die Leckage wahrscheinlich gelegen ist. Anhand von Fig. 5 wird hierzu ein erstes Verfahren beschrieben. Zur Durchführung dieses Verfahrens kann in der Steuereinrichtung 8 ein entsprechendes Programmmodul, nämlich ein Leckage-Detektionsmodul vorhanden sein. Zur Leckage-Erkennung werden zu einem bestimmten Zeitpunkt t der Ausgangsdruck der Pumpeinheit 4 $p_{dis}$ sowie der zu diesem Zeitpunkt von den jeweiligen Drucksensoreinheiten d erfasste Druck $p_{cri}$ ($p_{cri1}$ ..... $p_{cri,n}$) betrachtet. Aus diesen wird die Differenz, d. h. der tatsächliche Druckverlust zu einem bestimmten Zeitpunkt t $p_{dis}$ - $p_{cri,n}$ gebildet. Diese Werte werden jeweils in einem Restwertbildungsschritt $R(R_1......R_n)$ getrennt für jeden Teilbereich, d. h. getrennt für jedes Modell $A(A_1.......A_n)$ von den zu den jeweiligen Zeitpunkten und Durchflüssen zu erwartenden Druckverlusten gemäß der Modelle A, d. h. den Druckverlusten $p_{pipe}(p_{pipe,1}.......p_{pipe,n})$, subtrahiert. Auf diese Weise werden für die einzelnen Teilbereiche die Restwerte $r(r_1.........r_n)$ gebildet. In einem nächsten Schritt wird dann in einem Lokalisierungsmodul 28 bzw. Lokalisierungsschritt 28 betrachtet, welcher der Restwerte r größer, welcher gleich oder welcher kleiner 0 ist. Die Wahrscheinlichkeit eines Lecks wird dann in denjenigen Teilbereich lokalisiert, in welchen der Restwert r gleich oder kleiner 0 ist. D. h. es wird angenommen, dass dort ein Leck auftritt, wo der Druckverlust größer als erwartet ist. In den anderen Teilbereichen des Wasserversorgungsnetzes wird der Druck aufgrund des sich gleichzeitig verringernden Durchflusses dafür ansteigen, sodass dort der Restwert r größer 0 ist. Das bedeutet, dass die Wahrscheinlichkeit einer Leckage dort am größten ist, wo der Restwert 0 oder kleiner 0 ist. Dadurch, dass lediglich das Vorzeichen der Restwerte und nicht der tatsächliche Wert betrachtet wird, wird der Einfluss von Schwankungen aufgrund des Wasserverbrauches bei dieser Betrachtung eliminiert.

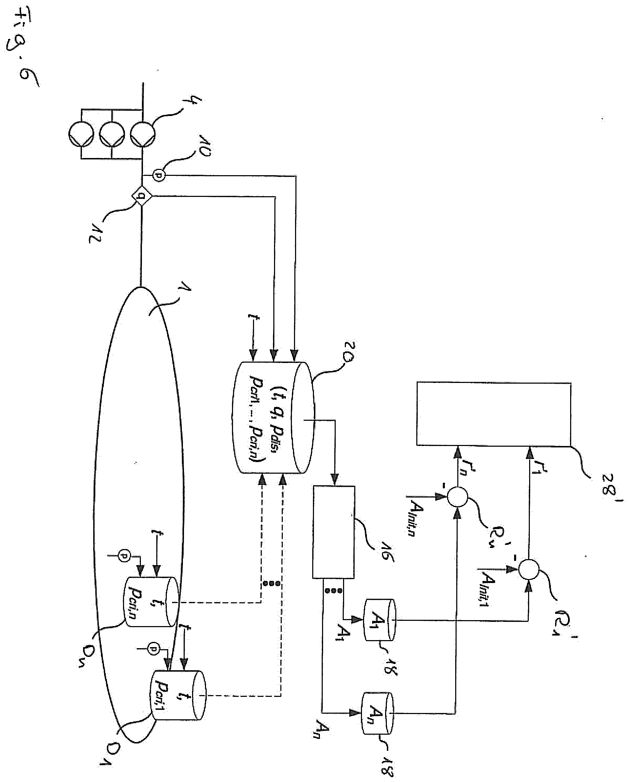

Anhand von Fig. 6 wird ein zweites Verfahren zur Lokalisierung von Leckagen beschrieben. Dieses Verfahren unterscheidet sich von den vorangehend anhand von Fig. 5 erläuterten Verfahren dadurch, dass in den Restwertbildungsschritten $R'(R'_1......R'_n)$ kein Restwert zwischen dem erwarteten Druckverlust und dem tatsächlichen Druckverlust gebildet wird, sondern die Parameter der aktuellen Modelle A mit Parametern der zwar geltenden Modelle $A_{Init}(A_{Init,1} .......A_{Init,n})$ verglichen werden. D. h. nach der Aktualisierung eines Modells A aufgrund neuer Messwerte von den Drucksensoreinheiten D wird das so erzeugte Modell A mit dem jeweiligen Modell $A_{Init}$ für denselben Teilbereich, welches vorher gegolten hat, verglichen. D. h. die Parameter des einen Modells werden in den Restwertbildungsschritten R' von den zugehörigen Parametern des anderen Modells subtrahiert. Dabei werden die Parameter, d. h. Druckverlustwerte für dieselben Betriebszustände, d. h. dieselben Zeitpunkte und Durchflüsse berücksichtigt. Die so gebildeten Restwerte $r'(r'_1......r'_n)$ werden in dem Lokalisierungsmodul 28' miteinander verglichen. In dem Lokalisierungsmodul 28' wird dabei analysiert, für welchen der Teilbereiche sich die Parameter des Modells A geändert haben. Dabei werden sich nicht nur die Parameter in dem Teilbereich ändern, in welchem die Leckage gelegen ist, jedoch werden sich in dem Teilbereich, in dem die Leckage gelegen ist, die den Druckverlust repräsentierenden Parameter a gemäß obiger Formel positiv ändern, während sie sich in den Teilbereichen, in denen kein Leck auftritt, negativ ändern werden. D. h. die den Druckverlust repräsentierenden Parameter a des Modells A erhöhen sich für den Teilbereich, in denen eine Leckage vorhanden ist, während sie sich für die anderen Teilbereiche verringern werden. Dies wird in dem Lokalisierungsmodul 28' analysiert, sodass dort dann der Teilbereich zugehörig dem Modell $A(A_1......A_n)$ bestimmt werden kann, in welchem die Leckage aufgetreten ist.

**Bezugszeichenliste**

| | |
|---|---|
| 1 | Wasserversorgungsnetz |
| 2 | Zuleitung |
| 4 | Pumpeinheit |
| 6 | Zweige |
| 8 | Steuereinrichtung |
| 10 | Drucksensor |
| 12 | Durchflusssensor |
| 14 | Pumpenaggregate |
| 16 | Modellbildungsmodul |
| 18 | Speicher |

| 20 | Datenspeicher |
| 21 | Solldruckbestimmungsmodul |
| 22 | Vergleicher |
| 23 | Solldruckspeicher |
| 24 | Drehzahlregler |
| 26 | Auswahlmodul |
| 28,28' | Lokalisierungsmodul |

| $D_1 - D_n$ | Drucksensoreinheiten |
| $A_1 - A_n$ | Modelle für den Druckverlust in den einzelnen Teilbereichen |
| $S_1 - S_n$ | Additionsschritte |
| $R_1 - R_n$ | Restwertbildungsschritte |
| $r_1 - r_n$ | Restwerte |
| t | Zeit |
| p | Druck |
| q | Durchfluss |
| n | Pumpendrehzahl |
| $P_{cri}$ | erfasster Druck an kritischen Punkten |
| $P_{dis}$ | Druck ausgangsseitig des Pumpenaggregates |
| $P_{pipe}$ | Druckverlust gemäß Modell |
| $P_{criref}$ | erforderlicher Minimaldruck im Teilbereich |
| $P_{ref}$ | Referenzdruck |

**Patentansprüche**

1. Pumpensystem für ein Wasserversorgungsnetz (1) mit zumindest einer Pumpeinrichtung (4), einem den Druck an der Druckseite der Pumpeinrichtung (4) erfassenden Drucksensor (10), einem den Durchfluss der Pumpeinrichtung (4) erfassenden Durchflusssensor (12), mehreren Drucksensoreinheiten (D), welche zur entfernten Anordnung von der Pumpeinrichtung (4) in verschiedenen Teilbereichen des Wasserversorgungsnetzes vorgesehen sind, und einer Steuereinrichtung (8) zur Steuerung der Pumpeinrichtung (4),
**dadurch gekennzeichnet, dass**
die Steuereinrichtung (8) ein Modellbildungsmodul (16) aufweist, welches ausgebildet ist, auf Grundlage mehrerer Druckmesswerte zumindest zweier Drucksensoreinheiten (D) für die zumindest zwei zugehörigen Teilbereiche jeweils ein den Druckverlust von dem Drucksensor (10) zu der Position der jeweiligen Drucksensoreinheit repräsentierendes Modell (A) zu erzeugen, wobei die erzeugten Modelle (A) jeweils den Druckverlust von der Pumpeinrichtung (4) bis zu der Position der zugehörigen Drucksensoreinheit (D) in Abhängigkeit der Zeit (t) und des Durchflusses (q) der Pumpeinrichtung (4) abbilden, und dass die Steuereinrichtung (8) zur Regelung der Pumpeinrichtung (4) auf Grundlage der erzeugten Modelle (A) ausgebildet ist.

2. Pumpensystem nach Anspruch 1, **dadurch gekennzeichnet, dass** die Steuereinrichtung (8) derart ausgebildet ist, dass sie die Pumpeinrichtung (4) auf einen vorbestimmten Solldruck regelt, wobei die Steuereinrichtung (8) ein Solldruckbestimmungsmodul (22) aufweist, welches ausgebildet ist, diesen Solldruck ($P_{ref}$) abhängig von Zeit (t) und/oder Durchfluss (q) der Pumpeinrichtung (4) auf Grundlage der zuvor erstellten, den Druckverlust repräsentierenden Modelle (A) zu ermitteln.

3. Pumpensystem nach Anspruch 2, **dadurch gekennzeichnet, dass** das Solldruckbestimmungsmodul (22) derart ausgebildet ist, dass es einen Solldruck ($P_{ref}$) für die Pumpeinrichtung (4) in der Weise ermittelt, dass für jeden der Teilbereiche des Wasserversorgungsnetzes (1) der gewünschte Minimaldruck mit dem aus dem zugehörigen Modell (A) ermittelten Druckverlust zu einem Summendruckwert addiert wird und der höchste der auf diese Weise ermittelten Summendruckwerten als Solldruck ($P_{ref}$) ausgewählt wird.

4. Pumpensystem nach einem der vorangehenden Ansprüche, **dadurch gekennzeichnet, dass** das Modellbildungsmodul (16) derart ausgestaltet ist, dass es in zeitlichen Abständen die gebildeten Modelle (A) auf Grundlage neuerer von den Drucksensoreinheiten (D) bereitgestellter Druckwerte aktualisiert.

5. Pumpensystem nach einem der vorangehenden Ansprüche, **dadurch gekennzeichnet, dass** die Drucksensoreinheiten (D) jeweils mit einem Messwertspeicher ausgestattet sind, welcher geeignet ist, mehrere Druckmesswerte jeweils mit einem Zeitstempel zu speichern.

6. Pumpensystem nach einem der vorangehenden Ansprüche, **dadurch gekennzeichnet, dass** die Drucksensoreinheiten (D) jeweils mit einem Kommunikationsmodul ausgestattet sind, welches zur Kommunikation mit der Steuereinrichtung (8) geeignet ist.

7. Pumpensystem nach einem der vorangehenden Ansprüche, **dadurch gekennzeichnet, dass** die Steuereinrichtung (8) Teil der Pumpeinrichtung (4) und insbesondere eines Pumpenaggregates (14) ist.

8. Pumpensystem nach einem der vorangehenden Ansprüche, **dadurch gekennzeichnet, dass** die Steuereinrichtung (8) ein Leckage-Detektionsmodul aufweist, welches derart ausgestaltet ist, dass es über den Durchflusssensor (12) zu einem wiederkehrenden vorbestimmten Zeitpunkt oder in einer wiederkehrenden vorbestimmten Zeitspanne, vorzugsweise täglich, den Durchfluss (q) erfasst und den erfassten Durchfluss (q) mit einem Grenzwert und/oder einem oder mehreren in vorangehenden Zeitpunkten oder Zeitspannen erfassten Durchflüssen vergleicht.

9. Pumpensystem nach einem der vorangehenden Ansprüche, **dadurch gekennzeichnet, dass** die Steuereinrichtung (8) ein Leckage-Detektionsmodul aufweist, welches derart ausgestaltet ist, dass es zum Bestimmen des wahrscheinlichen Ortes einer Leckage für die einzelnen Teilbereiche jeweils einen tatsächlichen Druckverlust auf Grundlage von Messwerten des Drucksensors (10) sowie der jeweiligen Drucksensoreinheit (D) bestimmt und diesen tatsächlichen Druckverlust mit einem aus dem zugehörigen Modell (A) abgeleiteten erwarteten Druckverlust vergleicht.

10. Pumpensystem nach Anspruch 9, **dadurch gekennzeichnet, dass** das Leckage-Detektionsmodul derart ausgebildet ist, dass es für denjenigen Teilbereich eine wahrscheinliche Leckage anzeigt, für welchen der tatsächliche Druckverlust gleich oder größer als der erwartete Druckverlust ist.

11. Pumpensystem nach einem der vorangehenden Ansprüche, **dadurch gekennzeichnet, dass** die Steuereinrichtung (8) ein Leckagedetektionsmodul aufweist, welches derart ausgestaltet ist, dass es für die einzelnen Teilbereiche bei einer Aktualisierung des zugehörigen Modells (A) für den zu erwartenden Druckabfall in diesem Teilbereich durch das Modellbildungsmodul (16) den zu erwartenden Druckabfall für eine bestimmten Betriebszustand gemäß einem aktualisierten Modell (A) mit dem zu erwartenden Druckabfall gemäß einem vorherigen Modell ($A_{Init}$) vergleicht und auf Grundlage einer Veränderung des zu erwartenden Druckabfalls eine wahrscheinliche Leckage in dem zugehörigen Teilbereich erkennt.

12. Verfahren zur Regelung zumindest einer Pumpeinrichtung (4) in einem Wasserversorgungsnetz (1), gemäß welchem das Wasserversorgungsnetz in mehrere Teilbereiche aufgeteilt wird und in zumindest zwei Teilbereichen an jeweils einem kritischen Punkt zu mehreren Zeitpunkten der Druck ($P_{cri}$) erfasst wird,
gleichzeitig der Druck ($P_{dis}$) ausgangsseitig der Pumpeinrichtung erfasst wird,
basierend auf diesen Druckmesswerten der Druckverlust (4) für zumindest zwei der Teilbereiche bestimmt wird,
basierend auf den bestimmten Druckverlusten für diese zumindest zwei Teilbereiche jeweils ein den Druckverlust ($P_{pipe}$) repräsentierendes Modell (A) erstellt wird, wobei gleichzeitig mit dem Erfassen des Druckes ($P_{cri}$) an den kritischen Punkten der Durchfluss (q) der Pumpeinrichtung (4) bestimmt wird und wobei die Modelle (A) so erstellt werden, dass sie den Druckverlust ($P_{pipe}$) in dem zugehörigen Teilbereich in Abhängigkeit der Zeit (t) und des Durchflusses (9) repräsentieren, und
die zumindest eine Pumpeinrichtung (4) auf Grundlage der erstellten Modelle (A) geregelt wird.

13. Verfahren nach Anspruch 12, bei welchem zur Regelung der Pumpeinrichtung (4) der aktuelle Durchfluss (9) der Pumpeinrichtung (4) erfasst wird, und für diesen Zeitpunkt und erfassten Durchfluss anhand der Modelle (A) die in sämtlichen Teilbereichen zu erwartenden Druckverluste ($P_{pipe}$) bestimmt werden und ein Ausgangsdruck der Pumpeinrichtung auf einen Solldruck ($P_{ref}$) geregelt wird, welcher diese Druckverluste kompensiert.

14. Verfahren nach einem der Ansprüche 11 bis 13, bei welchem der Druck an den kritischen Punkten zu mehreren Zeitpunkten erfasst wird, diese Messwerte gespeichert werden und eine Auswertung zum Erstellen oder Aktualisieren des zugehörigen Modells (A) nach einer bestimmten Anzahl von Messungen oder einer bestimmten Zeitspanne erfolgt.

15. Verfahren nach einem der Ansprüche 11 bis 14, bei welchem eine Leckage in dem Wasserversorgungsnetz (1) durch regelmäßiges, vorzugsweise tägliches Erfassen des Durchflusses (q) der Pumpeinrichtung (4) zu einem bestimmten Zeitpunkt oder in einer bestimmten Zeitspanne und Vergleich der so erfassten Durchflussmesswerte (q) untereinander oder mit zumindest einem vorbestimmten Grenzwert detektiert wird.

16. Verfahren nach einem der Ansprüche 11 bis 15, bei welchem ein wahrscheinlicher Ort einer Leckage in dem Wasserversorgungsnetz (1) durch den Vergleich eines aktuell für einen Teilbereich gemessenen Druckverlustes mit dem nach dem zugehörigen Modell (A) für diesen Teilbereich zu erwartenden Druckverlust bestimmt wird, wobei vorzugsweise dann eine Leckage in einem Teilbereich festgestellt wird, wenn in diesem der aktuelle Druckverlust gleich oder größer dem zu erwartenden Druckverlust ist.

17. Verfahren nach einem der Ansprüche 11 bis 15, bei welchem ein wahrscheinlicher Ort einer Leckage in dem Wasserversorgungsnetz (1) durch den Vergleich eines für einen Teilbereich in einem vorbestimmten Zeitraum gemessenen durchschnittlichen Druckverlustes mit dem nach dem zugehörigen Modell (A) für diesen Teilbereich im selben Zeitraum zu erwartenden durchschnittlichen Druckverlust bestimmt wird, wobei vorzugsweise dann eine Leckage in einem Teilbereich festgestellt wird, wenn in diesem der gemessene durchschnittliche Druckverlust gleich oder größer dem zu erwartenden durchschnittlichen Druckverlust ist.

18. Verfahren nach einem der Ansprüche 11 bis 17, bei welchem der wahrscheinliche Ort einer Leckage in dem Wasserversorgungsnetzwerk (1) durch den Vergleich des zu erwartenden Druckverlustes für einen oder mehrere Betriebszustände gemäß einem ersten Modell ($A_{Init}$) für einen Teilbereich mit dem zu erwartenden Druckverlust für dieselben Betriebszustände desselben Teilbereiches gemäß einem zweiten aktualisierten Modell (A) bestimmt wird.

**Claims**

1. A pump system for a water supply mains (1) with at least one pump device (4), with a pressure sensor (10) which detects the pressure at the delivery side of the pump device (4), with a flow sensor (12) which detects the flow rate of the pump device (4), with several pressure sensor units (D) which are provided for the remote arrangement from the pump device (4) in different part regions of the water supply mains, and with a control device (8) for the control of the pump device (4),
   **characterised in that**
   the control device (8) comprises a model formation module (16) which is designed in each case to produce a model (A) which represents the pressure loss from the pressure sensor (10) to the position of the respective pressure sensor unit, on the basis of several pressure measured values of at least two pressure sensor units (D) for the at least two associated part regions, wherein the produced models (A) each image the pressure loss from the pump device (4) up to the position of the associated pressure sensor unit (D) in dependence on the time (t) and the flow (q) of the pump device (4), and that the control device (8) is designed for the regulation of the pump device (4) on the basis of the produced models (A).

2. A pump system according to claim 1, **characterised in that** the control device (8) is designed in a manner such that it regulates the pump device (4) to a predefined desired pressure, wherein the control device (8) comprises a desired pressure evaluation module (22) which is designed to determine this desired pressure ($P_{ref}$) in a manner depending on the time (t) and/or the flow (q) of the pump device (4) on the basis of the previously created models (A) which represent the pressure loss.

3. A pump system according to claim 2, **characterised in that** the desired pressure evaluation model (22) is designed in a manner such that it determines a desired pressure ($P_{ref}$) for the pump device (4) in a manner such that for each of the part regions of the water supply mains (1), the desired minimal pressure is added to the pressure loss which is determined from the associated model (A), into a summed pressure value and the largest of the summed pressure values which are determined in this manner is selected as the desired pressure ($P_{ref}$).

4. A pump system according to one of the preceding claims, **characterised in that** the model formation module (16) is designed in a manner such that it updates the formed models (A) on the basis of newer pressure values which are provided by the pressure sensor units (D), in temporal intervals.

5. A pump system according to one of the preceding claims, **characterised in that** the pressure sensor units (D) are each provided with a measured value memory which is suitable for storing several pressure measured values in each case with a time stamp.

6. A pump system according to one of the preceding claims, **characterised in that** the pressure sensor units (D) are each provided with a communication module which is suitable for communication with the control device (8).

7. A pump system according to one of the preceding claims, **characterised in that** the control device (8) is part of a pump device (4) and in particular of a pump assembly (1).

8. A pump system according to one of the preceding claims, **characterised in that** the control device (8) comprises a leakage detection module which is designed in a manner such that via the flow sensor (12), it detects the flow (q) at a recurring predefined point in time or in a predefined recurring time interval, preferably daily and compares the detected flow (q) with a limit value and/or with one or more flows which are detected in preceding points in time or time intervals.

9. A pump system according to one of the preceding claims, **characterised in that** the control device (8) comprises a leakage detection module which is designed in a manner such that for determining the probable location of a leakage, it determines an actual pressure loss on the basis of measured values of the pressure sensor (10) as well as of the respective pressure sensor unit (D), for the individual part regions, and compares this actual pressure loss with an expected pressure loss which is derived from the associated model (A).

10. A pump system according to claim 9, **characterised in that** the leakage detection module is designed in a manner such that it indicates a probable leakage for that part region, for which the actual pressure loss is equal or greater than the expected pressure loss.

11. A pump system according to one of the preceding claims, **characterised in that** the control device (8) comprises a leakage detection module which is designed in a manner such that for the individual part regions, on updating of associated model (A) for the expected pressure drop in this part region by the model formation module (16), it compares the expected pressure drop for a certain operating condition according to an updated model (A) with the expected pressure drop according to a previous model ($A_{Init}$) and a recognises a probable leakage in the associated part region on the basis of a change of the expected pressure drop.

12. A method for regulating at least one pump device (4) in a water supply mains (1), according to which
the water supply mains is divided into several part regions and the pressure ($P_{cri}$) is detected in at least two part regions each at a critical point at several points in time,
the pressure ($P_{dis}$) at the outlet side of the pump device is simultaneously detected,
the pressure loss (4) for at least two of the part regions is determined on the basis of these pressure measured values,
a model (A) which represents the pressure loss ($P_{pipe}$) is created on the basis of the determined pressure losses for these at least two part regions, wherein the flow (q) of the pump device (4) is determined simultaneously with the detection of the pressure ($P_{cri}$) at the critical points, and wherein the models (A) are created such that they represent the pressure loss ($P_{pipe}$) in the associated part region in dependence on the time (t) and the flow (9), and the at least one pump device (4) is regulated on the basis of the created models (A).

13. A method according to claim 12, concerning which the current flow (9) of the pump device (4) is detected for the regulation of the pump device (4), and the pressure losses ($P_{pipe}$) which are to be expected in all part regions are determined for this point in time and detected flow on the basis of the models (A), and an outlet pressure of the pump device is regulated to a desired pressure ($P_{ref}$) which compensates these pressure losses.

14. A method according to one of the claims 11 to 13, concerning which the pressure at the critical points is detected at several points in time, these measured values stored and an evaluation for creating or updating the associated model (A) is effected after a certain number of measurements or after a certain time interval.

15. A method according to one of the claims 11 to 14, concerning which a leakage in the water supply mains (1) is detected by way of a regular, preferably daily detection of the flow (q) of the pump device (4) at a certain point in time or in a certain time interval and comparison of the thus detected flow measured values (q) amongst one another or with at least one predefined limit value are effected.

16. A method according to one of the claims 11 to 15, concerning which a probable location of a leakage in the water supply mains (1) is effected by the comparison of a pressure loss currently measured for a part region with the expected pressure loss for this part region according to the associated model (A), wherein preferably a leakage is ascertained in a part region, when, in this, the current pressure loss is the same or larger than the expected pressure loss.

17. A method according to one of the claims 11 to 15, concerning which a probable location of a leakage in the water supply mains (1) is effected by the comparison of an average pressure loss which is measured for a part region in a defined time interval, with the average pressure loss which is to be expected for this part region in the same time interval according to the associated model (A), wherein preferably a leakage is ascertained in a part region when, in this, the measured average pressure loss is the same or larger than the expected average pressure loss.

18. A method according to one of the claims 11 to 17, concerning which the probable location of a leakage in the water supply mains (1) is determined by the comparison of the expected pressure loss for one or more operating conditions according to a first model ($A_{Init}$) for a part region, with the expected pressure loss for the same operating conditions of the same part region according to a second updated module (A).

**Revendications**

1. Système de pompe pour un réseau d'alimentation en eau (1) avec au moins un dispositif de pompage (4), un capteur de pression (10) mesurant la pression du côté refoulement du dispositif de pompage (4), un capteur de flux (12) mesurant le flux passant par le dispositif de pompage (4), plusieurs unités de capteurs de pression (D) qui sont prévues à être disposées éloignées du dispositif de pompage (4) dans différentes zones du réseau d'alimentation en eau, et un dispositif de commande (8) pour commander le dispositif de pompage (4),
**caractérisé en ce que**
le dispositif de commande (8) comprend un module de modélisation (16) qui est configuré pour engendrer, sur la base de plusieurs valeurs mesurées de pression provenant d'au moins deux unités de capteurs de pression (D), pour chacune desdites au moins deux zones associées, un modèle (A) représentant la chute de pression entre le capteur de pression (10) et la position de l'unité de capteurs de pression respective, les modèles (A) engendrés représentant chacun la chute de pression entre le dispositif de pompage (4) et la position de l'unité de capteurs de pression (D) associée en fonction du temps (t) et du flux (q) du dispositif de pompage (4), et **en ce que** le dispositif de commande (8) pour la commande du dispositif de pompage (4) est configuré sur la base des modèles (A) engendrés.

2. Système de pompe selon la revendication 1, **caractérisé en ce que** le dispositif de commande (8) est configuré de façon qu'il règle le dispositif de pompage (4) à une pression de consigne prédéterminée, le dispositif de commande (8) comprenant un module de détermination de pression de consigne (22) qui est configuré pour déterminer cette pression de consigne ($P_{ref}$) en fonction du temps (t) et/ou du flux (q) du dispositif de pompage (4) sur la base des modèles (A) préalablement engendrés et représentant la chute de pression.

3. Système de pompe selon la revendication 2, **caractérisé en ce que** le module de détermination de pression de consigne (22) est configuré de façon telle qu'il détermine une pression de consigne ($P_{ref}$) pour le dispositif de pompage (4) de telle manière que pour chacune des zones du réseau d'alimentation en eau (1), la pression minimale souhaitée soit additionnée à la chute de pression déterminée par le modèle (A) associé pour donner une valeur de somme de pressions, et que la valeur la plus grande des valeurs de somme de pressions déterminées de cette façon est choisie comme pression de consigne ($P_{ref}$).

4. Système de pompe selon l'une des revendications précédentes, **caractérisé en ce que** le module de modélisation (16) est configuré de façon qu'il actualise les modèles (A) à des intervalles de temps sur la base de valeurs de pression plus récentes mises à disposition par les unités de capteurs de pression (D).

5. Système de pompe selon l'une des revendications précédentes, **caractérisé en ce que** les unités de capteurs de pression (D) sont pourvues chacune d'une mémoire de valeurs mesurées qui est adapté pour stocker plusieurs valeurs mesurées de pression avec un marquage de temps pour chacune.

6. Système de pompe selon l'une des revendications précédentes, **caractérisé en ce que** les unités de capteurs de pression (D) sont pourvues chacune d'un module de communication qui est adapté pour communiquer avec le dispositif de commande (8).

7. Système de pompe selon l'une des revendications précédentes, **caractérisé en ce que** le dispositif de commande (8) est une zone du dispositif de pompage (4) et notamment d'un groupe motopompe (14).

**8.** Système de pompe selon l'une des revendications précédentes, **caractérisé en ce que** le dispositif de commande (8) comprend un module pour détecter des fuites, qui est configuré de façon qu'il mesure, à un moment prédéterminé récurrent ou dans un intervalle de temps prédéterminé récurrent, de préférence tous les jours, le flux (q) via le capteur de flux (12) et qu'il compare le flux (q) capté avec une valeur limite et/ou avec une ou plusieurs valeurs de flux captées à des moments antérieurs ou pendant des intervalles de temps antérieurs.

**9.** Système de pompe selon l'une des revendications précédentes, **caractérisé en ce que** le dispositif de commande (8) comprend un module pour détecter des fuites, qui est configuré de façon que, pour déterminer le lieu probable d'une fuite, il détermine pour chacune des différentes zones une chute réelle de pression sur la base de valeurs mesurées du capteur de pression (10) et de l'unité de capteurs de pression (D) correspondante et qu'il compare cette chute de pression réelle avec une chute de pression attendue obtenue par le modèle (A) associé.

**10.** Système de pompe selon la revendication 9, **caractérisé en ce que** le module pour détecter des fuites est configuré de façon qu'il indique une fuite probable pour la zone pour laquelle la chute de pression réelle est égale ou supérieure à la chute de pression attendue.

**11.** Système de pompe selon l'une des revendications précédentes, **caractérisé en ce que** le dispositif de commande (8) comprend un module pour détecter des fuites, qui est configuré de façon qu'il compare, pour chacune des zones lors d'une actualisation du modèle (A) associé pour la chute de pression attendue dans cette zone, à l'aide du module de modélisation (16), la chute de pression prévisionnelle pour un certain état de fonctionnement selon un modèle (A) actualisé, avec la chute de pression prévisionnelle selon un modèle ($A_{Init}$) antérieur et qu'il détecte une fuite probable dans la zone correspondante sur la base d'un changement de la chute de pression prévisionnelle.

**12.** Procédé de réglage d'au moins un dispositif de pompage (4) dans un réseau d'alimentation en eau (1), selon lequel le réseau d'alimentation en eau est subdivisé en plusieurs zones et la pression ($P_{cri}$) est mesurée dans au moins deux zones à un point critique respectif à plusieurs moments,
la pression ($P_{dis}$) du côté sortie du dispositif de pompage est captée simultanément,
la chute de pression (4) est déterminée pour au moins deux des zones sur la base des valeurs mesurées de pression,
un modèle (A) représentant la chute de pression ($P_{pipe}$) correspondante est établi sur la base des chutes de pression déterminées pour lesdites au moins deux zones, le flux (q) du dispositif de pompage (4) étant déterminée simultanément avec le mesurage de la pression ($P_{cri}$) aux points critiques, et les modèles (A) étant établis de façon telle qu'ils représentent la chute de pression ($P_{pipe}$) dans la zone associée en fonction du temps (t) et du flux (9), et ledit au moins un dispositif de pompage (4) est réglé sur la base des modèles (A) établis.

**13.** Procédé selon la revendication 12, selon lequel, pour la régulation du dispositif de pompage (4), le flux (9) actuel du dispositif de pompage (4) est capté et pour ce moment et le flux capté, les chutes de pression ($P_{pipe}$) prévisionnelles dans toutes les zones sont déterminées à l'aide des modèles (A) et une pression de sortie du dispositif de pompage est réglée à une pression de consigne ($P_{ref}$) qui compense ces chutes de pression.

**14.** Procédé selon l'une des revendications 11 à 13, selon lequel la pression aux points critiques est mesurée à plusieurs moments, ces valeurs mesurées sont stockées et une exploitation pour établir ou actualiser le modèle (A) correspondant est effectuée après un nombre déterminé de mesures ou après un intervalle de temps déterminé.

**15.** Procédé selon l'une des revendications 11 à 14, selon lequel une fuite est recherchée dans le réseau d'alimentation en eau (1) par le fait de mesurer de manière régulière, de préférence tous les jours, le flux (q) du dispositif de pompage (4) à un moment déterminé ou dans un intervalle de temps déterminé, et par comparaison des valeurs mesurées de flux (q) les uns aux autres ou à au moins une valeur limite prédéterminée.

**16.** Procédé selon l'une des revendications 11 à 15, selon lequel un endroit probable d'une fuite dans le réseau d'alimentation en eau (1) est recherché par la comparaison d'une chute de pression actuellement mesurée pour une zone, avec la chute de pression moyenne prévisionnelle dans cette zone selon le modèle (A) associé, la fuite étant ensuite constatée dans une zone, de préférence, lorsque la chute de pression actuelle dans cette zone est égale ou supérieure à la chute de pression prévisionnelle.

**17.** Procédé selon l'une des revendications 11 à 15, selon lequel un endroit probable d'une fuite dans le réseau d'alimentation en eau (1) est recherché par la comparaison d'une chute de pression moyenne mesurée pendant une période de temps prédéterminée pour une zone, avec la chute de pression moyenne prévisionnelle selon le modèle (A) associé dans la même période de temps, la fuite étant ensuite constatée dans une zone, de préférence, lorsque la chute de pression mesurée moyenne dans cette zone est égale ou supérieure à la chute de pression moyenne prévisionnelle.

18. Procédé selon l'une des revendications 11 à 17, selon lequel l'endroit probable d'une fuite dans le réseau d'alimentation en eau (1) est déterminé par la comparaison d'une chute de pression prévisionnelle pour un ou plusieurs états de fonctionnement selon un premier modèle ($A_{Init}$) pour une zone, avec la chute de pression prévisionnelle pour les mêmes états de fonctionnement de la même zone selon un deuxième modèle (A) actualisé.

Fig. 1

Fig. 2

*Fig. 3*

*Fig. 4*

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2476907 A1

- WO 2008090359 A2